Europäisches Patentamt

European Patent Office

Office européen des brevets

(11) Publication number:

**0 336 685**
**A2**

# (12) EUROPEAN PATENT APPLICATION

(21) Application number: 89303279.7

(22) Date of filing: 03.04.89

(51) Int. Cl.⁴: **G 11 B 20/18**
**G 11 B 20/24**

(30) Priority: 08.04.88 GB 8808208

(43) Date of publication of application:
11.10.89 Bulletin 89/41

(84) Designated Contracting States:
AT BE CH DE ES FR GR IT LI LU NL SE

(71) Applicant: **CEDAR AUDIO LIMITED**
**Botolph House 16 Botolph Lane**
**Cambridge (GB)**

(72) Inventor: **Rayner, Peter John Wynn**
**69 High Street**
**Oakington Cambridge (GB)**

(74) Representative: **Nash, Keith Wilfrid et al**
**KEITH W. NASH & Co. Pearl Assurance House 90-92**
**Regent Street**
**Cambridge CB2 1DP (GB)**

(54) Impulse noise detection and supression.

(57) A signal processing system for handling, in particular, a signal produced by an auto-regressive (AR) process having a gap in the good data, wherein a mathematical model based on an algorithm is generated based on the good data before and after the gap, the missing data is predicted using the mathematical model, and additionally the mathematical model is also used to predict data following the gap and the predicted data values for points following the gap are compared with the actual data for those points following the gap, and without altering the mathematical model the missing data is recalculated to minimise any difference between the predicted and actual data for points following the gap, and the recalculated data is substituted for the originally predicted data for the points in the gap.

EP 0 336 685 A2

**Description**

## Impulse Noise Detection and Supression

### Field of invention

This invention concerns apparatus and methods by which impulse noise during the replay of recorded signals can be detected and largely suppressed. The invention is of particular application to the removal of scratch transients from the replay of gramophone recordings and the elimination of editing transients from the optical sound track of a film. In particular the invention relates to digital signal processing techniques for the removal of such impulse noise.

### Background to the invention

A typical example of the problem is that of a gramophone record which has been broken and in which the two halves have been glued back together again. This produces two clicks per revolution together with the surface noise inherent in badly treated gramophone records.

The two clicks per revolution are caused as a result of the imperfect join between the two halves of the record which causes the gramophone stylus to drop down or rise up the step formed by the junction between the two halves.

It is known to determine the presence and duration of such large amplitude clicks by using a threshold detector with the threshold set above the peak signal level of the speech or music but well below the peak of the amplitude excursions resulting from the clicks.

If a signal is being sampled for digital processing, it will be found that using typical sampling frequencies, a click can account for up to 80 samples typically and if the click amplitude excursion is to be removed from the signal on replay, the 80 samples around the click have to be replaced.

Whilst removal is straightforward, replacement is not so straightforward.

One approach has been to use a linear prediction algorithm to take uncorrupted signal samples from either side of the click and using an averaging process, combine the two predicted signals to interpolate the missing samples. This technique was found to yield reasonable results for one click in each revolution but it was observed that the other click in each revolution appeared to be replaced by a dull thud. A study of this problem is described in the paper given at the 43rd congress of the FIAF in Berlin June 1987 by S V Vaseghi, P J W Rainer and L Stickles and reported in Image Technology of October 1987 under the title "Digital signal processing methods for the removal of scratches and surface noise from gramophone recordings".

As explained in that report, it is clear that one click is of short duration and has no lasting effect whereas the other produces a relatively low frequency decaying sine wave after the click. Observation of the waveform indicated that although the signal was completely obliterated during the short duration high amplitude click, the low frequency decaying sine wave appeared to be added to the speech or music signal. The purpose of the apparatus and techniques described in the aforementioned paper were to identify the low frequency decaying sine wave and to subtract it from the original signals so as to leave only the speech or music signal. The short duration click whether followed by a decaying sine wave or could not be dealt with using the predictive algorithm as previously described.

Using the techniques described in the aforementioned paper, a signal forming a template of the decaying sine wave was obtained. The signal from the beginning of the record was then restored by simply detecting the presence of the clicks using a simple threshold detector and removing the samples containing the click by gating, linearly interpolating from both before and after the click to infill the missing samples, and cross correlating the template with the signal immediately following each detected and corrected click, to align precisely the low frequency transient and the template. The peak in the cross correlation indicates in addition the scaling factor to be used when subtracting a scaled version of the template from the actual signal so as to give optimal signal to noise ratio.

As described in the aforementioned report, both types of click could be dealt with in this way since if there was no low frequency sine wave transient following the click, the cross corellation indicated that it was not necessary to subtract a scale version of the template. Where the cross corellation did indicate that subtraction of a scaled version of the template is called for, the appropriate scaling factor is used with the template signal and the original signal restored by removing the decaying sine wave content following the click.

Whilst the process substantially eliminated the thud associated with the removed alternate clicks, the linear prediction algorithm technique used to restore signal during the gated out samples associated with large long duration clicks was found to leave much to be desired. A large amplitude click resulting in up to 80 samples being omitted, created great difficulties in obtained an accurate assessment of the data to replace the missing 80 samples and attention was therefore directed to an improved signal restoration technique using predictive algorithms.

It is accordingly an object of the present invention to provide apparatus and method for mathematically modelling missing data from both before and after a gap in good data so that after the missing data has been restored, the resulting data corresponds as closely as possible (based on the available information) to the missing data.

### Summary of the invention

According to the present invention in a signal processing system in which a gap occurs in good data, an estimate of the signal values to replace the missing data can be obtained as follows:-

1. generating a mathematical model using good data from both before and after the gap to give a signal model for predicting values of data in the gap,

2. using this mathematical model to predict data values for the gap using good data values preceding the gap,

3. continuing to use the mathematical model to predict values for points following the gap for which actual values exist.

4. comparing the predicted values for points following the gap with the actual values available from the good data following the gap and without altering the model, recalculating the predicted data values for the points in the gap so as to minimise the total error in the predicted values for the points following the gap for which predicted values and actual values are available, and

5. substituting the recalculated values for the points in the gap.

By considering more rather than fewer data points before and after any gap, so the accuracy of the estimation and correction process can be improved and in practice a compromise has to be struck between the time available for processing and the accuracy of prediction required.

Using high speed processing real time estimation and restoration of gaps in signals of data, speech and music is possible.

The invention is not in any way limited to the estimation of sample values in gaps in recorded speech or music signals but may be used to estimate the values of any function in between recorded samples particularly where the process which is to be interpolated is a continuous function of one or more independent variables such as time, and the samples or the measurements of the process are available over a finite set of points.

In the more general case, the interpolation schemes must model the function in between the known points by some plausible functional form and this must be sufficiently general so as to be able to approximate a large class of signals that may arise in practice.

Assuming that an appropriate general case model can be created, so as to be able to approximate a large class of signals, interpolation can be effected to high levels of accuracy. Typically interpolation is effected using polynomial interpolation or the Lagrange formula. Polynomial interpolation assumes that the underlying function can be well approximated by a polynomial of order N. For finite N this assumption is not valid if the underlying process contains strong poles. If recorded data are used to estimate the coefficients of the assumed polynomial, these coefficients can be employed subsequently to interpolate the process in between its recorded values. Ideally it is desired to involve as many samples as possible in the interpolation process but in practice the polynomial order cannot be set greater than perhaps 4 or 5 without producing hazardous results. However a drawback of such conventional methods is that they lack a suitable structure for the interpolation of a block of consecutive missing data samples and it is an objective of the invention to provide an interpolation system by which a physical model for the underlying signal generation mechanism can be postulated, the recorded data used to estimate the parameters of the assumed model and the estimated parameters subsequently employed to interpolate the process.

The invention thus provides an interpolation algorithm for the restoration of a sequence of unknown samples of an auto regressive (AR) process embedded in a number of known samples, in which the available data samples on both sides of the missing data points are used to produce a suboptimal estimate of the coefficient vector of the assumed AR model, the parameter estimates are then employed in a further least squares optimisation step to estimate the unknown signal samples, and these estimates are used as inputs in further iterations of the algorithm in order to improve the estimation quality.

Assuming that the processes involved have a Gaussian probability distribution, the method may be regarded as an instance of a general iterative algorithm for the maximum likelihood estimation, referred to as the EM (estimate and maximise) algorithm.

In an EM algorithm, the observations are considered incomplete and the algorithm iterates between estimating the sufficient statistics of the "complete data" given the observation and the current estimate of the parameters (the E step) and maximising the likelihood of the complete data, using the estimating sufficient statistics (the M step). Likewise the interpolation algorithm iterates between estimating the AR model parameters, given an estimate to the unknown signal sequence, and improving the signal estimate using the AR parameter estimates.

As described above applications of such an interpolation algorithm include the restoration of speech and music signals that are non-linearly distorted and obliterated by impulsive noise or scratch pulses. The algorithm may also be successfully applied to the restoration of clipped signals.

In the following sections, different systems are described as follows:

In section 3.2 AR systems and their use in the modelling of audio signals are described;

In section 3.3, the interpolation algorithm is introduced;

Section 3.4 deals with a statistical analysis of the interpolation error;

Section 3.5 deals with the computational methods and the complexity of the , algorithm;

Sections 3.6 and 3.7 deal with the effect of the AR model parameters, the number of missing data samples, the nature of the excitations signal and the model order, on the interpolation qualitys and;

Sections 3.8 amd 3.9 deal with the experimental results and conclusions.

In the following description the invention will be described by way of example with reference to the accompanying drawings and references will also be made to the sheets of equations.

In the drawings

Figure (3.1) shows a signal sequence containing a block of unknown data sample.

Figures 3.1(a) - 3.1(c) show the frequency characteristics of an AR system of order 16, the impulse response is shown in Figure 3.1(b) and Figure 3.1 (c) shows the same experiment where a model order of 20 is used.

Figures 3.2(a) and 3.2(b) show a signal obtained by filtering a White with an AR system of order 20, and interpolation results using AR model orders of 20 and 40 are shown.

Figure 3.3(a) shows a segment of male voiced speech, 3.3(b) shows the excitation signal obtained by modelling the undistorted signal and Figure 3.3 (c) shows the same signal with an interpolated segment of 40 samples long.

Figures 3.4(a) and 3.4(b) demonstrate the effect of the increasing number of missing data samples.

Figures 3.5(a) and (b) and 3.6(a) and (b) show similar results of the application of the algorithm to music signals.

Figure 4 is a flow chart exemplifying the system of the invention.

## 3.2 Autoregressive Models

The discrete time autoregressive processes are those for which each sample of the process may be completely described as a linear function of the previous samples plus an unpredictable stochastic term [41-49]. Let the sequence $(x_n)$ be the samples of an AR system of order p. The signal model is given by the equation shown in (3.1) Where a is the parameter vector of the AR system and $e_n$ is a zero mean white noise sequence. The AR spectrum is given by the equation driven in (3.2), where $b_k$ is the correlation function of the AR model parameters, defined by equation (3.3).

Speech and musical signals have been modelled as AutoRegressive processes. Essentially the implication is that the signals are assumed as the output of an all-pole Infinite Impulse Response (IIR) system driven by a zero mean Gaussian white noise excitation. For speech signals the AR system parameters may be regarded as a model of the characteristics of the vocal tract and the unpredictable stochastic term as the glottal excitation. Similarly for musical signals the AR model parameters represent the characteristics of the musical instruments. Of course in practice the vocal tract changes shape as different sounds are generated and the musical instruments characteristics change with variations in their tuning. This nonstationary behaviour is reflected in the time-varying transfere function of the model. However because of the physical and mechanical constraints on the vocal tract and articulators it is reasonable to assume that the system varies slowly with time so that on short time basis it may be approximated as stationary. Note that for audio signals neither the excitation signal $(e_n)$ nor the AR parameter vector a are observable but they may be estimated from the observation process $x_n$. Autoregressive modelling has been used by the research workers in the speech community, in such areas as speech recognition, synthesis and compression. There, the main motiviation for the use of the AR modelling is to condense the speech signal into more easily manageable and less redundant parameters. The justification for the use of the AR modelling in signal restoration is that audio signal spectrum is mainly characterised by the existance of high Q resonators which can be adequately modelled by AR systems. Furthermore as the model order p tends to infinity, it completely matches the spectrum of the signal. Of course in practice due to the nonstationary characteristics of audio signals and the computational complexity only a limited order p can be used. Experiments indicate that AR models of order 20-40 are adequate for modelling of audio signals, in the sense that the residual estimate $(e_n)$ tends to a zero mean white noise sequence. The advantage of the AR modelling is that the signal restoration problem can be closely related to the AR parameter estimation problem. It will be seen that the time modelling of the signal generation system is an invaluable tool in the processing of noisy and partial data.

## 3.3 The Autoregressive Model Based Interpolation Algorithm

This section describes the theory of the interpolation algorithm. It is assumed that the recorded data consists of N samples $(x_0,x_0,x_2,...,x_{N-1})$ of an AR process of order p as denoted by equation (3.4). and that a block of 1 consecutive samples, starting at the sample point m, $(x_m,x_m+1,...,x_mL-1)$ are missing. It is also assumed that the unknown samples occur at instances $(m, m+1, ..., m+L-1)$, where p is less than or equal to m, which is less than $(m+L-1)$ and which in turn is less than or equal to $(N-p-1)$. The problem is to estimate the AR model parameters $(a_1,a_2,...a_p)$, the unknown signal values $(x_m,x_m+1,...,x_m+L-1)$ and the input excitationn power such as the interpolation error variance is minimised.

Eq(3.4) can be expanded and rewritten into the following matrix forms shown in (3.5).

Bold face letters in the matrix denote the unknown data samples. In compact vector notation this system of equations may be written as shown in equation (3.6).

For the optimal parameter vector estimate a, the error vector e is orthogonal to the linear vector space spanned by the data matrix X. For speech and musical signals the vector e can be regarded as the unpredictable excitation signal. The quadratic error (or the estimate of the excitation power) which is a function of both the missing data vector estimate $(x_1 = x_m,x_m+1,...x_m+L-1)$ and the unknown parameter vector a, is given by equation (3.7).

Since the parameter vector a, as well as some data samples are unknown, the squared error function involves nonlinear unknown terms of fourth order as in the second term. Minimisation of the squared error as a function of either the parameter vector a or the unknown data vector $x_1$ results in a set of nonlinear system of equations of cubic order, the solution of which is not trivial. In the following a suboptimal but computationally sufficient two stage solution to the above problem has been developed. The first stage of the algorithm involves the computation of the AR model parameter vector from the incomplete data. Two different approaches were taken to linearise this problem. In one method all the equations in (3.5) which involve the unknown data samples are ignored. The remaining linear set of equations are used for the AR parameter estimation. This approach has the advantage that it does not make any assumptions about the missing data samples. In the second method an initial estimate of the unknown data vector is used to linearise the problem. Typically the initial estimate is taken as the null vector $\overset{*}{x}_1 = O$. The estimate parameter vector is then used in the second stage of the solution to obtain the least squared error estimate of the missing data samples. The estimate of the data vecor may be used in further iterations of the algorithm in order to improve the estimation quality. The first stage of the solution (using the initial estimate of the unknown data vector) obtained fom the orthogonal projection theory is given by the set of normal equations given in equation (3.8).

The second stage of solution involves the estimation of unknown samples. The subset of equations (3.5) which involve nonlinear unknown terms are those that include the unknown data samples. In general for an AR model of order p with L missing data samples there are L+P such equations. The subset of nonlinear equations in eq(3.5) which are function of the unknown samples are given by equation (3.9).

The estimate of the AR parameter vector a from the first stage of the solution may be used in (3.9) to linearise this system of equations. In order to obtain the least mean squared error estimate of the unknown data vector the eq(3.9) may be partitioned and rewritten in the form shown in equation (3.10).

Note that in (3.10) the known and the unknown data samples are placed in separate vectors. In vector notation this can be written as in equation (3.11).

Where e is the error vector, $A_1$ is the first coefficient matrix, $x_1$ is the unknown data vector being estimated, $A_2$ is the second coefficient matrix and $x_2$ is the data vector on the right hand side of the equation (3.0) which has known data values as its elements. The total squared error is given by equation (3.12).

Note that e is not the interpolation error energy, it is the excitation energy estimate. The estimate of the unknown data vector $x_1$ is given by equation (3.13), where the second term or the right hand side is the estimation error vector. Substituting 3.13 in 3.12 and minimising the square of the estimation error with respect to the scalar variable by taking the derivative of the total square error gives equation (3.14) which can be simplified to equation (3.15) which in turn can be reduced to equation (3.16).

Since vector v is arbitrary, the estimate of data vector $x_1$ obtained by setting the terms in the bracket of (3.16) to zero, is given by equation (3.17).

The elements of the LxL matrices $|A^TA_1|$ and $|A^TA_2|$ are the correlation values of the AR model parameters. These matrices can be expanded and written in the form shown in equation (3.18) which yields the autocorrelation values of the AR model parameter. Eq(3.17) thus can be reduced to equation (3.19).

It is interesting to note that the autocorrelation matrix $B_1$ in equation (3.19) has a Toeplitz structure. This equation can be efficiently solved by the Levinson algorithm. This algorithm has computational complexity of O(1) where L is the dimension of the matrix equation. The estimate data vector may be used in a further iteration of the algorithm in order to improve the estimation quality. The performance of the interpolation method is a function of the number of missing samples, the number of samples available on both side of missing data block and the band-limiting. It improves as the number of known samples used in estimation of AR vector coefficients increases and degrades as the number of unknown samples increases.

3.4 Interpolation Error Analysis

The interpolation error vector is defined as the difference between the actual data vector and the restored signal and is given by equation (3.20).

A good measure of the interpolation is the normalised minimum mean squared interpolation error, defined by equation (3.21).

From eqs(3.19) and (3.20) the interpolcation error vector, can be rewritten as shown in equation (3.22).

From equations (3.18) the bracketed term in (3.22) may be expanded as shown in (3.23).

From the equality shown in (3.20), eq(3.23) becomes as shown in (3.25), so that the relationship is as shown in equation (3.26).

By substituting eq(3.26) in (3.21), the normalised minimum mean square interpolation error becomes as shown in (3.27).

The correlation matrix of the AR model parameters may be decomposed into the unitary matrix of the othonormal eigenvectors of $B_1$,Q, and the diagonal matrix of the eigenvalues is as given by (3.28).

Where H denotes the Hermitian transpose it can be shown that the interpolation error is as given by eq(3.29).

For a given process, the normalised interpolation error is proportional to the sum of the inverse of the eigenvalues of the autocorrelation matrix of the AR parameters as indicated by (3.28). Note that since the autocorrelation matrix $B_1$ is a Toeplitze positive definite matrix, the eigenvalues are non-negative. As the signal power depends upon the excitation power and the AR parameters it is desirable to substitute the functional relation in 3.27. Taking the z transform of the eq(3.1) gives (3.30).

In (3.30) X(z),E(z),A(z) are the z-transforms of $(x_n)$, $(e_n)$ and $(1,-a_1,-a_2,...,-a_p)$ respectively. Taking the expectation of the integral of the squared modulus of eq(3.30) on the unit circle ($z = e^{jw}$) gives the equation of (3.31).

The expectation and the integral operators can be interchanged. Since the signal power is as given in (3.31 (a)) and for white noise sequence $e_n$,$E(e^{jw})$ is a constant, eq(3.31) becomes eq(3.32).

From eq(3.29) and (3.32) the relative interpolation error becomes as shown in (3.33). Eq(3.33) describes the relative interpolation error completely in terms of the length of the missing data block and the AR model parameters. The interpolation error decreases as the AR spectral energy increases. For a given model as the number of missing samples in a sequence increases the correlation matrix $B_1$ becomes more ill-conditioned. An ill-conditioned matrix will, in general, have some very small eigenvalues. Therefore, the interpolation error, which is proportional to the sum of the inverse of the eigenvalues of $B_1$ increases with increasing length of the unknown data sequence.

### 3.5 Computational Aspects of Complexity of the Interpolation Algorithm

The interpolation algorithm essentially involves two computational stages; (a) calculation of the AR model parameter vector a and (b) calculation of the unknown data vector $x_1$. In this section the various methods of computation of these qualities are described.

### 3.5.1 Computation of the AR model parameters

This first stage of the algorithm involves the solution of the system of normal equations; $a = R^{-1}p$, where R is the correlation matrix and p is the crosscorrelation vector. There are many methods in the literature for solving these system of equations. In general the various methods may be divided into the following two broad categories; (a) the block estimation and (b) the iterative search methods. In general the solution of the normal equations using the matrix inverse of Gauss-Jordan elimination methods involves computational complexity of $O(p^3)$, where p is the order of the AR model. However efficient solutions which exploit the various structures of the correlation matrix exist. The two widely used block estimation methods are the autocovariance and the autocorrelation methods.

In the autocovariance method no assumption about the data values outside the range of observation. The resulting autocovariance matrix R has a symmetric structure (with respect to the main diagonal). The autocovariance system of equations can be efficiently solved by the Cholsky decomposition method [21]. The algorithm has computational complexity of $O(p^3)$, where p is the AR model order.

The autocorrelation method assumes that the data values outside the range of observation are zero. The autocorrelation matrix R has a Toeplitz structure. The autocorrelation system of equations can be most efficiently solved using the Levinson algorithm. This algorithm has computational complexity of $O(p)$. For large model order p and/or highly correlated signal the correlation matrix may become ill-conditioned or nearly singular. Then the Cholsky or the Toeplitz methods may produce incorrect results or they might even fail to produce any results. In general it is preferable to solve the equations by the robust Singular Value Decomposition (SVD) algorithm which normally produces reliable results. The SVD algorithm checks for the redundancies in the system of linear equations, and modifies the system if needed, to produce meaningful results.

Strictly the block estimation algorithms are only applicable to stationary signals. Speech and musical signals are highly nonstationary processes. However for reasonably short time window (less than 50ms) these signals may be considered as approximately stationary. For audio signal processing the maximum data window used in the block estimation of the model parameter must not exceed 50 ms.

There are also a variety of iterative (adaptive algorithms) which may be used to solve for the parameter vector a. These methods operate sequentially on the signal and can be made to adapt to the nonstationary characteristics of the signal. As the prediction error is a FIR function of the predictor coefficients, the least mean square error performance function has a unique minimum. The iterative algorithms find the optimum operating point by searching for the minimum of the performance surface. These methods include the Recusive Least Squares (RLS) algorithm and its fast varieties which are the exact sequential implementation of the normal equation and the Least Mean Square (LMS) steepest descent algorithm.

### 3.5.2 Computation of the unknown data vector

The calculation of the unknown data vector involves the solution of the equation (3.17). It is interesting to note that the matrix $B_1$ has always a Toeplitz structure. These set of equations may therefore be solved efficiently using the Levinson algorithm which has computational complexity of $O(p)$. For large numbers of missing signal samples eq(3.18) can become illconditioned. It is therefore more reliable to solve the equations with the more robust SVD method.

### 3.6 The Effect of the Signal Characteristics and the Number of Unknown Samples

The equality of estimation of the unknown data samples depends upon:

(a) The AR model parameters; that is the signal correlation structure.

(b) How well the AR parameters may be estimated from the incomplete data record.

(c) The length of the missing sample sequence.

(d) The nature of the excitation signal during the instances in which data are missing.

In AR modelling a signal is decomposed into a deterministic part, which is predictable from the past samples, and an unpredictable orthogonal component. The quality of estimation depends on the ratio of the variance of the deterministic part of the signal to that of the orthogonal part eq(3.33). This ratio itself is a function of the AR parameter vector. The AR model parameters determine the band-limiting and the correlation between successive samples of the process. In general the estimation quality improves as the correlation between successive sample values increases that is as the signal becomes more deterministic. Therefore in general the peakier the AR spectrum the smaller will be the expected interpolation error.

The estimation of the AR parameters from the incomplete data is the first stage of the algorithm. Two different approaches to this problem were considered. In the first approach all those equations in (3.5) which involve nonlinear terms were discarded. The remaining set form a linear system of equations which may be solved by the covariance or the autocorrelation method. This approach has the advantage that no assumption is made about the missing data samples. In fact from an ensemble point of view, on the assumption that different equations are drawn from independent trials of the system, the effect of discarding some equations can be regarded as equivalent to that of having a small data record. In the second method starting from an initial guess of the unknown data vector the AR parameters are computed. These parameters are used to estimate the missing data samples. These estimates may be used in further iterations of the algorithm in order to improve the estimation quality. Fortunately experiments indicate that the estimate of the AR parameter vector a is largely insensitive to the corruption of the covariance matrix due ro missing data samples, if the ratio of the number of recorded data to the number of unknown samples is large enough (say greater than 10). It was mentioned that the algorithm may be regardedd as an instance of a general iterative estimation algorithm in which the output estimates may be used as the inputs in further iterations of the algorithm in order to improve the estimation quality. However, due to the relative insensitivity of the AR model parameter estimates to the values of the missing data samples, the algorithm usually converges in one or two iterations.

The estimation quality also depends on the number of the missing data samples. The system of equations in (3.19) which is used in the estimation of the unknown samples becomes increasingly ill-conditioned with increasing length of the unknown data sequence. In general an ill-conditioned matrix will have some very small eigenvalues. Therefore as indicated in eq(3.33) the relative estimation error per sample increases with the length of missing data sequence. Observations indicate that in a given block of missing samples the maximum error occurs at the mid-point of the data block. This maximum also increases with increasing length of the unknown data sequence.

Finally the estimation error is significantly dependent on the nature of the excitation signal within the missing data samples. When speech or musical signals are modelled by AR systems, the residual signal often consists of a mixture of a random noise like signal plus a train of quasi-periodic pulses. The least squares parameter estimation methods assume that the underlying excitation is Gaussian and do not allow for non-Gaussian impulsive-like excitations. Therefore strong excitation pulses which may occur within the unknown data sequence cannot be easily accounted for. These pulses largely contribute to the estimation error. Since the effect of excitationn fades exponentially with time the worst case is when an excitation pulse occurs at the begining of a missing sample sequence.

## 3.7 The Model Order

Among other factors, the interpolation quality is influenced by the choice of the AR model order. In general the quality of the interpolation improves with the increasing model order. In eq(3.4) there are $L+P$ nonlinear equations which are linearised using an estimate the AR parameter vector a. For effective prediction p of greater than or equal to 1. Therefore the set of $L+P$ linearised equations which involve only L unknowns (data samples) are always overdetermined. As a result the minimum error signal is not zero. The minimum error in eq(3.9) is an estimate of the excitation signal. Ideally it is desired that the minimum error signal be equal to the original excitation signal or at least have the same variance. Experiments indicate that for small model order p the error signal variance is much smaller than that of the excitation signal. The situation improves as p increases. That is as the set of linearised equations becomes more overdetermined. Experiments indicate that in general a model order twice that of the number of missing samples is adequate.

## 3.8 Experiments and Results

In this section some experimental results of the application of the interpolation algorithm are presented. The experiments were focussed on the investigation of the interpolation error variance with the varying number of missing data samples, AR system parameters, model order and the excitation signal characteristics. Both synthetic and real speech and musical signals were used. Speech and musical signals were sampled at the rate of 20 KHz and each sample was quantized to 12 bits precision. In all of the experiments the actual signals were completely available. Some segment of the signal was discarded and restored. The restored signals were compared with the original.

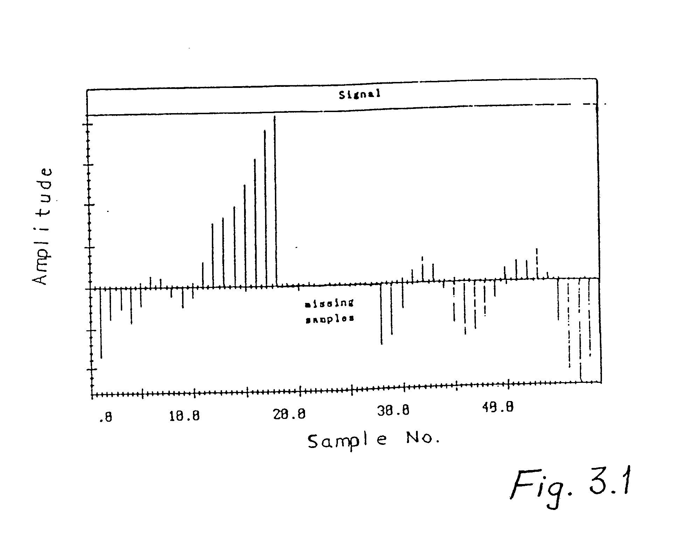

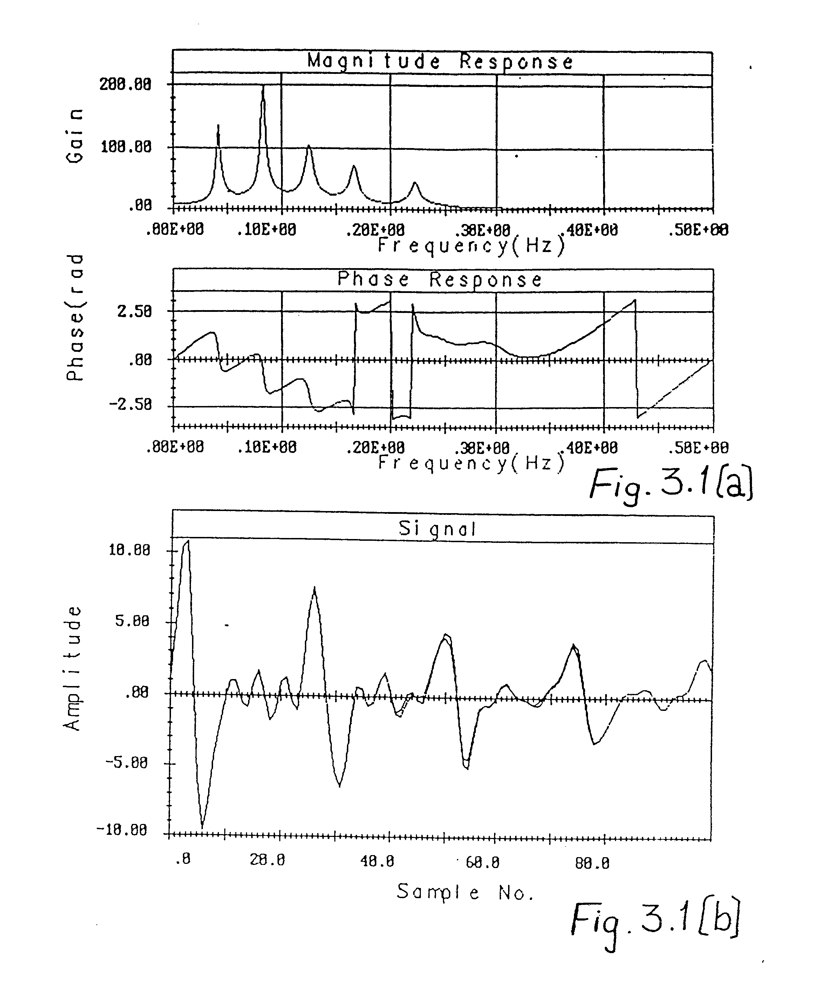

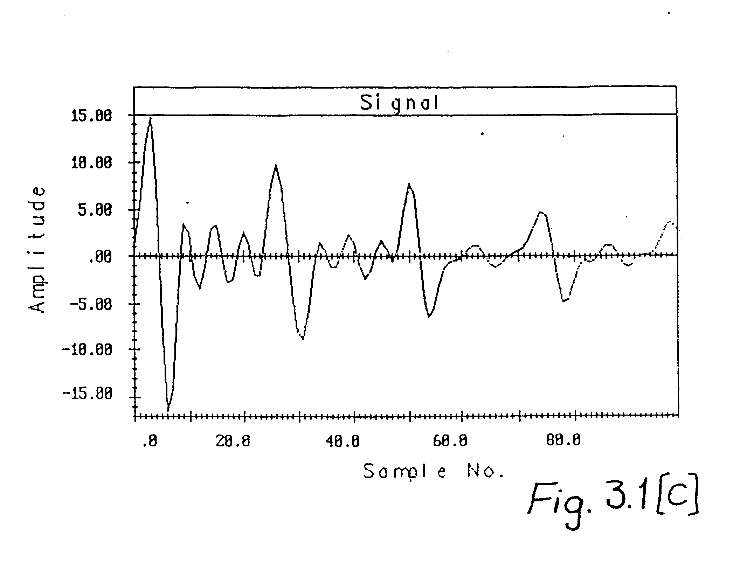

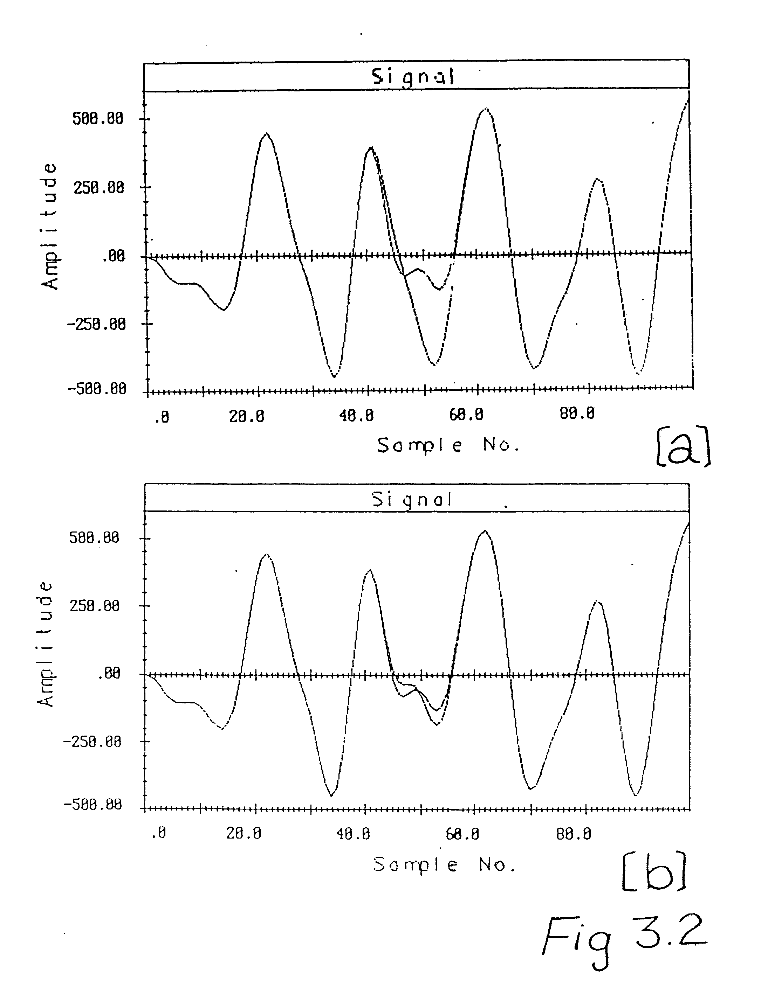

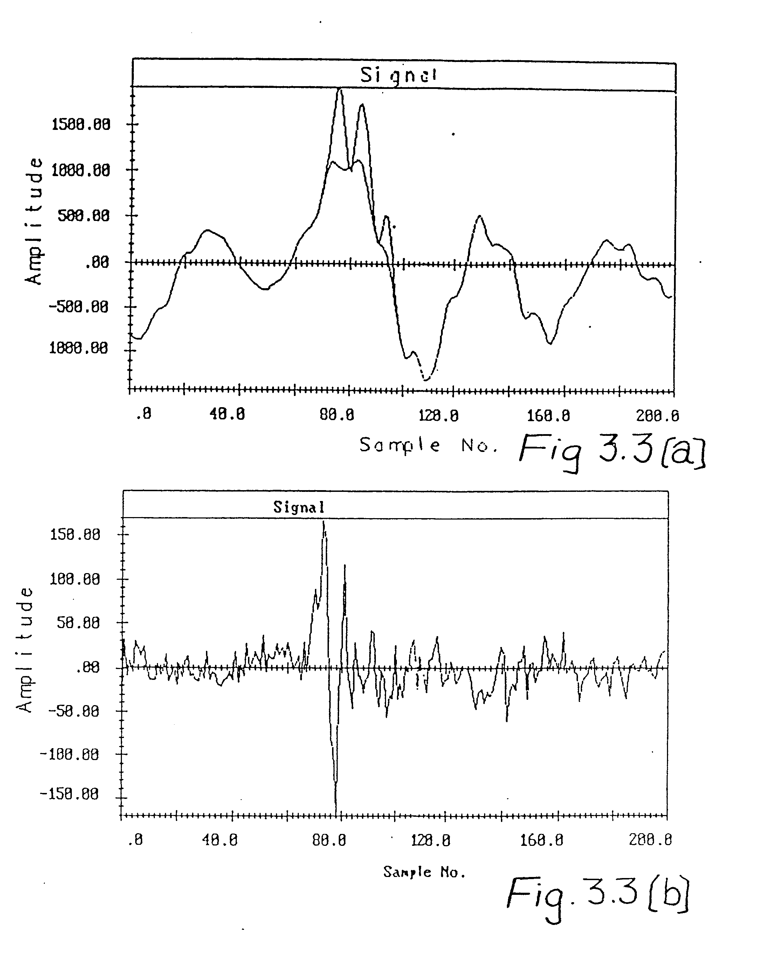

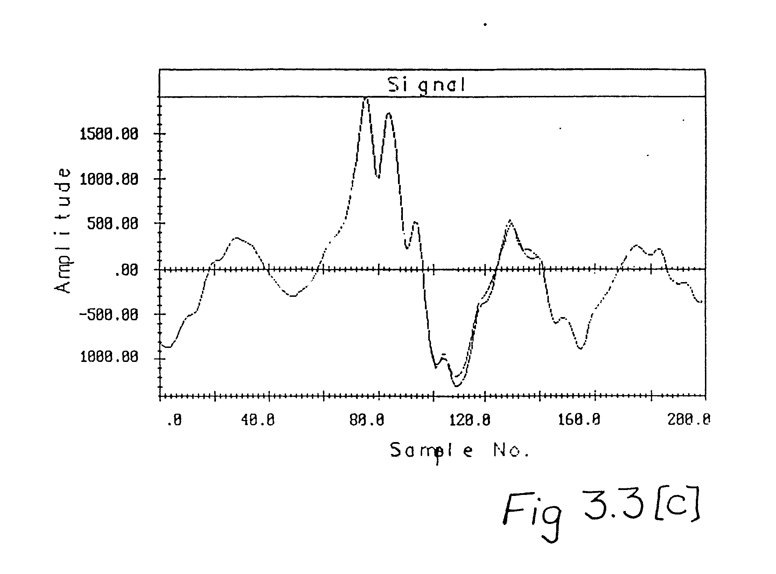

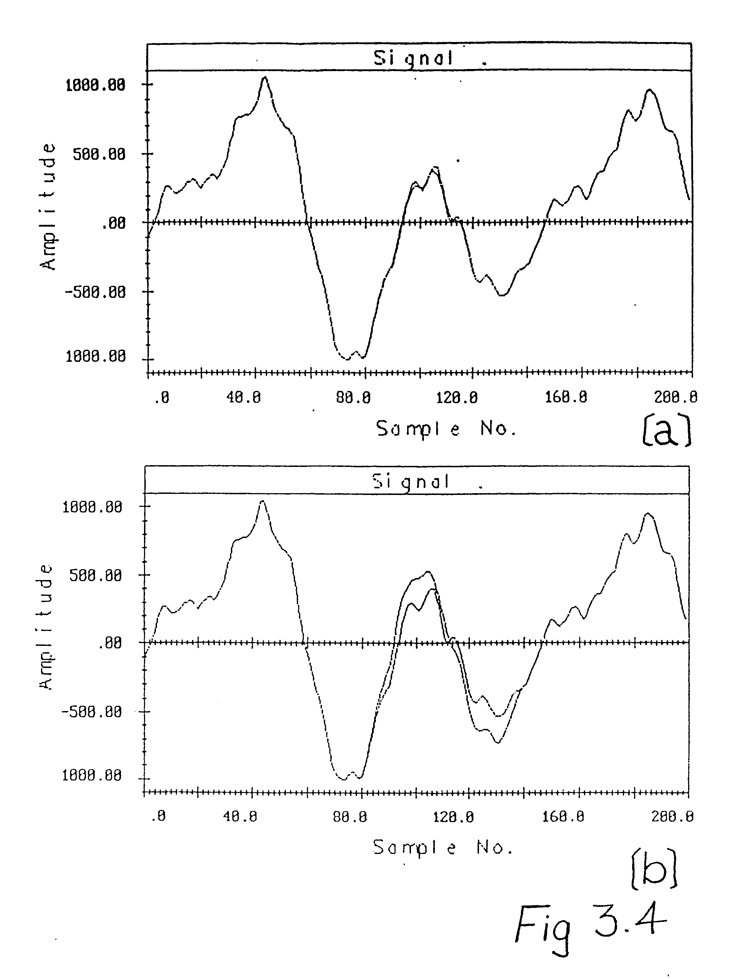

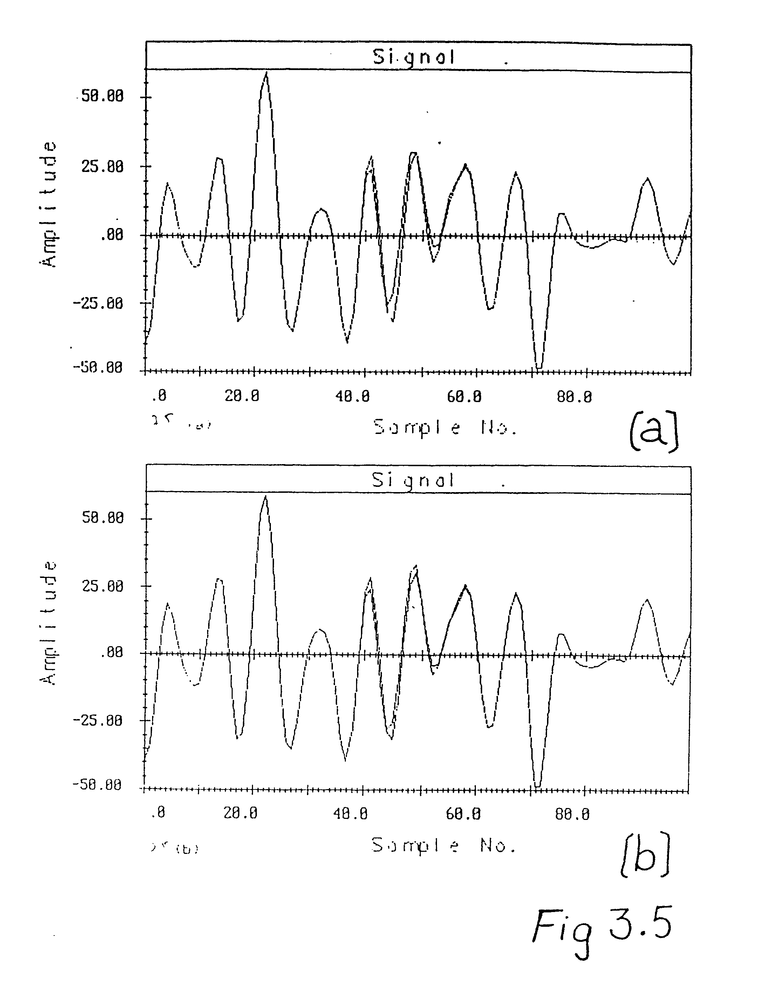

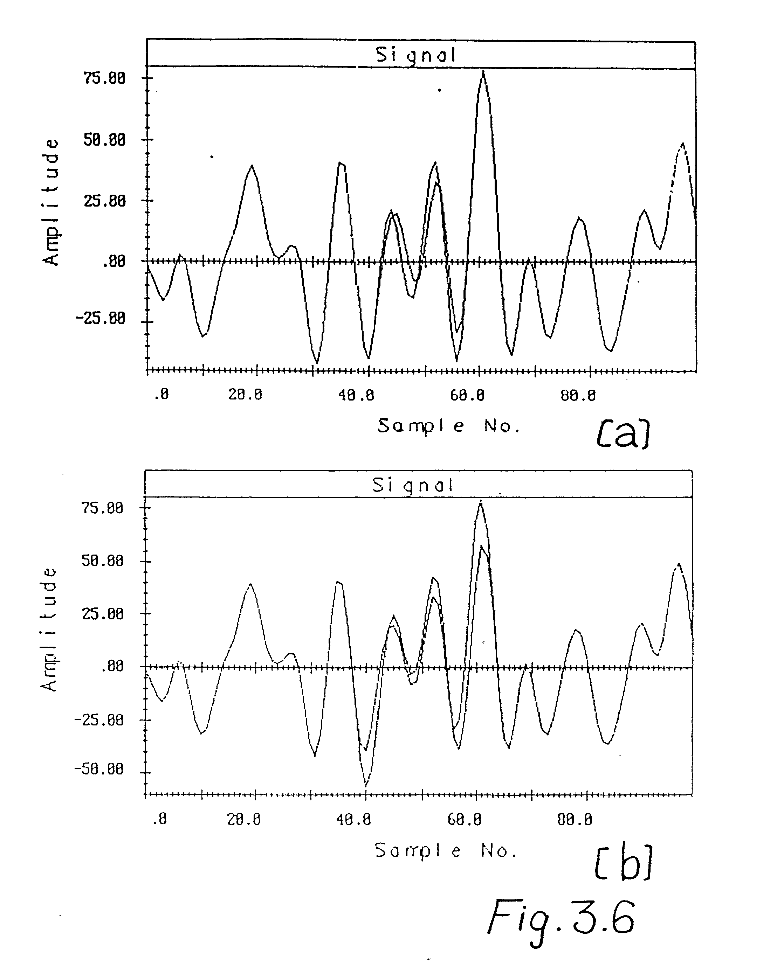

The first example is that of the interpolation of an analytic signal. Fig(3.1.a) shows the frequency characteristics of an AR system of order 16. The impulse response of the system is shown in Fig(3.1.b). Also shown in this figure is the result of interpolation of a segment of 40 samples long, starting from sample point 80. The signal was interpolated using an AR model of order 16. Fig(3.1.c) shows the same experiment where a model order of 20 were used. Clearly the interpolation error has reduced with the increased model order. This example is a case of the rather general observation, that some over modelling of the underlying process usually improves the interpolation quality. Fig(3.2.a) shows a signal which is obtained by passing white Gaussian noise through an AR system of order 20. The interpolation result of a segment of 40 samples for the choice of AR model orders of 20 and 40 are shown in Figures 3.2.a and 3.2.b respectively. It can be seen that the interpolation error has reduced significantly with the increasing model order.

The next example was chosen to demonstrate the effect of the nature of the underlying excitation on the interpolation quality. A segment of voiced speech of a male speaker is shown in Fig(3.3.a). The signal was modelled by an AR model of order 30. The estimated AR parameters were used to inverse filter the signal. The excitation signal obtained by modelling the undistorted signal is shown in Fig(3.3.b). Fig(3.3.a) also shows the result of the interpolation of a segment of 30 samples of the signal starting at the sample point 50. The segment was chosen such that it coincides with the instance of a strong underlying excitation pulse. For stable systems the effect of excitation fades exponentially with time.

In such cases the interpolation error is larger as it becomes more difficult to account for the unpredictable strong excitation pulses. Fig(3.3.c) shows the same signal with an interpolated segment of 40 samples long starting at the same point 100 after the excitation pulse has ceased. The interpolation results seem much more satisfactory as the underlying excitation is now more Gaussian.

Figures (3.4.a) and (3.4.b) demonstrate the effect of the increasing number of missing data samples on the interpolation quality. In Fig(3.4.a) a segment of 40 samples of a speech signal starting at the point 80 were interpolated. Fig(3.4.b) shows the interpolation result when the number of missing samples was increased to 60 samples. As shown the interpolation error increases with the increased number of missing data samples. Figure (3.5) and (3.6) show some similar results of the application of the algorithm to musical signals.

The interpolation algorithm has been applied to long records of speech and musical signals. In experiments involving noiseless signals, up to 15% of the total samples, in segments of up to 20 samples long, chosen randomly, were discarded and interpolated. Listening tests showed that the imperfections in the interpolation were inaudiable. The algorithm has been successfully applied to the restoration of audio signals recorded on gramophone records or cylinders which were degraded by such commonly encountered defects as scratch or impulse noise pulses. In the case of scratch type noise the algorithm has been applied for restoration of signal segments of up to 8ms (160 samples at 20 KHz sampling rate) duration. In the case of impulsive surface noise the duration of the individual missing data sequences were much smaller (less than 0.5ms), but they occur much more frequently than scratch pulses.

3.9 Conclusion

In this section a method has been described for the interpolation of a sequence of unknown samples of a discrete-time signal. The method is based on the assumption that the signal can be adequately modelled by an AR system. The AR parameter estimation problem was tied to the signal interpolation problem and the MMSE objective criterion was used for the estimation of both the AR parameter vector and data samples. Various methods of computation of the solution were described. The performance of the algorithm as a function of the signal characteristics, the length of Lhe missing data samples and the order of the assumed AR model were analysed. The algorithm has been successfully applied to restoration of speech and musical signals degraded by impulsive type interferences and scratch pulses.

As previously discussed in order to eliminate the effect of clicks or editing joins in a speech or music recording, a thresholding technique must first be used to identify the presence of the clicks, a threshold output controlled gating circuit must be used to gate out the corrupted data samples in the region of the clicks, the immediately following samples must be checked and corrected using the technique described in the article in Image Technology of October 1987 entitled "Digital signal processing methods for the removal of scratches and surface noise from gramophone recordings", thereby to remove any cyclic transient following the click, and thereafter the method of the invention must be used to interpolate and restore data in the gap in the recorded data occasioned by the gating out of the corrupted data, so as to obtain the best possible estimate for the data values to be inserted in the gap for subsequent replay.

Noise may be further reduced by utilising the noise reduction techniques described in our co-pending application filed concurrently herewith and entitled "Noise reduction in the playback of recorded sound". Typically the technique described in our co-pending application will be applied to the signal after the click transients have been removed and signal enhancement has been effected using the techniques of the present invention.

A further noise reduction process may be employed either before or after the noise reduction technique described in our co-pending application, namely a method of removing impulsive surface noise as described on pages 459 and 460 of Image Technology October 1987 in the aforementioned article entitled "Digital signal processing methods for the removal of scratches and surface noise from gramophone recordings". The pages concerned deal with a report of a noise reduction technique in which an analytical model is determined which will produce a particular signal when driven by a noise signal called an excitation signal. For a speech signal the model can be considered to be a model of the vocal tract and the excitation can be considered as the glottal pulses for voiced speech or white noise for unvoiced speech. This technique is known as Linear Predictive Coding.

The reason for applying this method is that the difference between impulsive noise and genuine excitation pulses is much enhanced in the excitation signal as can be seen from Figure 7 of the aforementioned article. This shows a speech and music signal plus surface noise which should be compared with Figure 8 of the same article, which shows the corresponding excitation signal.

The pulses in the excitation signal which correspond to the surface noise can be detected by means of a threshold detector and their position noted in time. It is then possible to remove from the original signal a few samples in the vicinity of the surface noise impulse and use a prediction based on the signal on either side of the discarded samples to fill the gap where samples have been discarded. This produces quite reasonable results but these are two refinements possible.

The first of these is to apply matched filtering to the excitation signal, to improve the detectability of the surface noise impulses. A matched filter is one whose impulse response is the time release of the signal one wishes to detect. Such a filter gives optimal signal to noise ratio for detecting a known signal in the presence of white noise.

In the example under consideration this signal is known, since it is that function which when applied to the modelling filter will produce the surface noise impulse of the modelling filter output. It is a relatively straightforward matter to calculate the parameters of the matched filter from the parameter of the modelling filter. The improvement in detectability can be seen by comparing the excitation waveform and the waveform of the output of the matched filter. Figure 8 of the aforementioned article shows the excitation signal and Figure 9 the matched filter output.

The matched filter excitation signal can be treated in the manner just described. That is the matched filtered signal is passed through a threshold detector which detects the position of the surface noise pulses. Samples in the vicinity of these pulses are discarded from the original signal and replaced by predicted values.

The second refinement that can be incorporated is to make the threshold of the detector dependent on the signal level. Thus in loud passages the level of the speech or signal may be comparable with the noise impulses even after matched filtering of the excitation signal. However if the speech level is high it is not important if some of the low level noise pulses are missed.

Conversely, in quiet passages the speech level is low and low level noise pulses will be more objectionable. Thus in quiet passages it would be advantageous to use a lower threshold level to ensure that lower level noise impulses are not missed whilst in high level passages the threshold must be increased to ensure that speech signals are not mistaken for noise impulses.

In order to achieve this the threshold level may to advantage be dynamically varied in accordance with the signal power estimated from a sliding window operating on preceding signal samples. Typically up to 600 such preceding sample values are used covering up to 30 milliseconds. Figure 10 of the aforementioned article shows the signal which is obtained, after surface noise processing and this should be compared with the unprocessed signal shown in Figure 7 of the aforementioned article.

Where interpolation is needed to be performed in this further noise reduction system, a signal interpolation method based on the present invention may be incorporated to advantage.

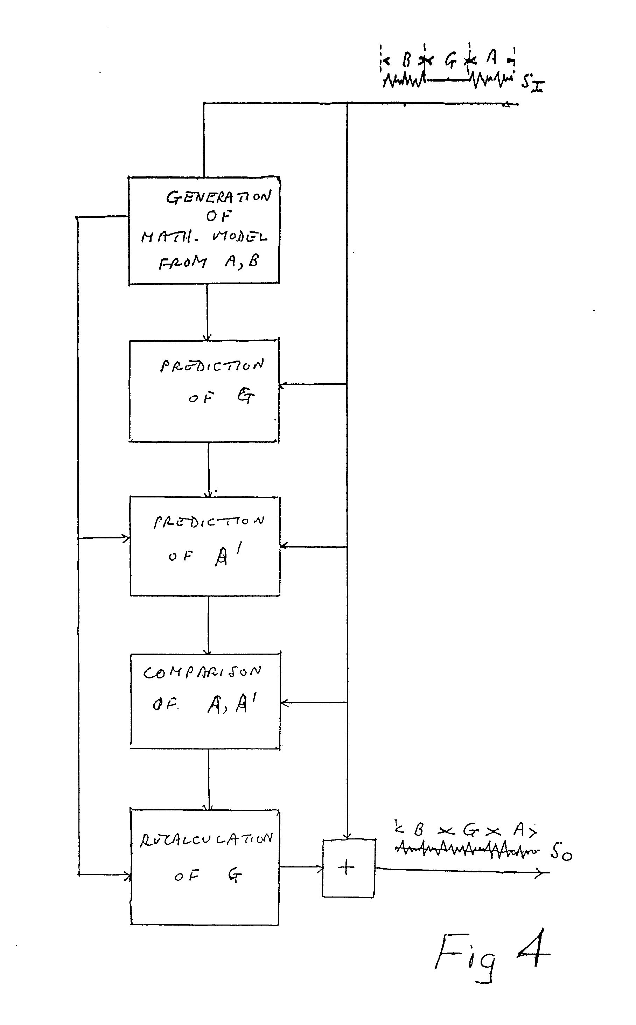

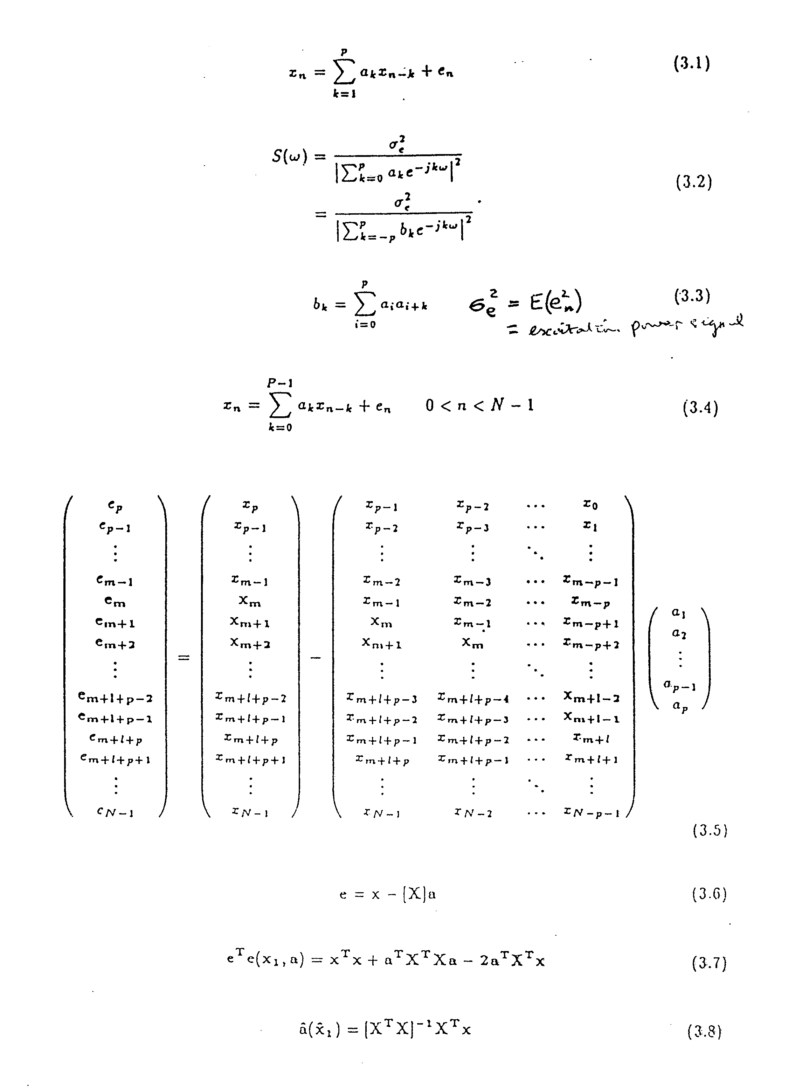

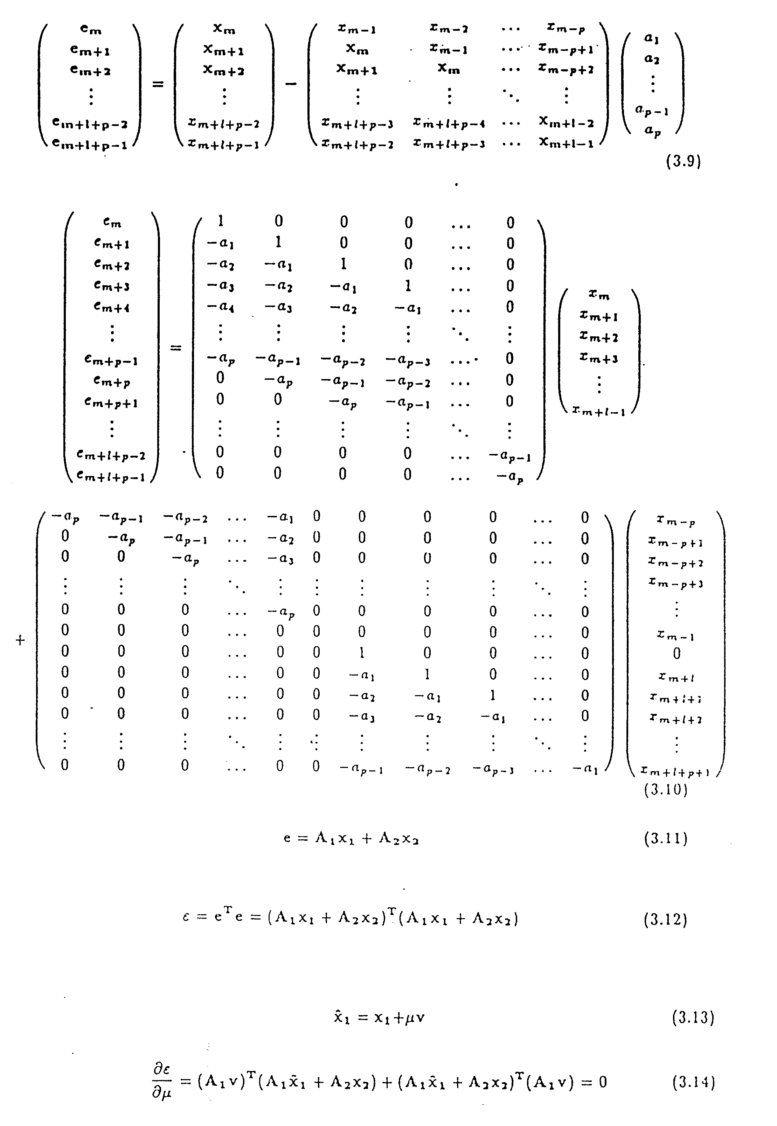

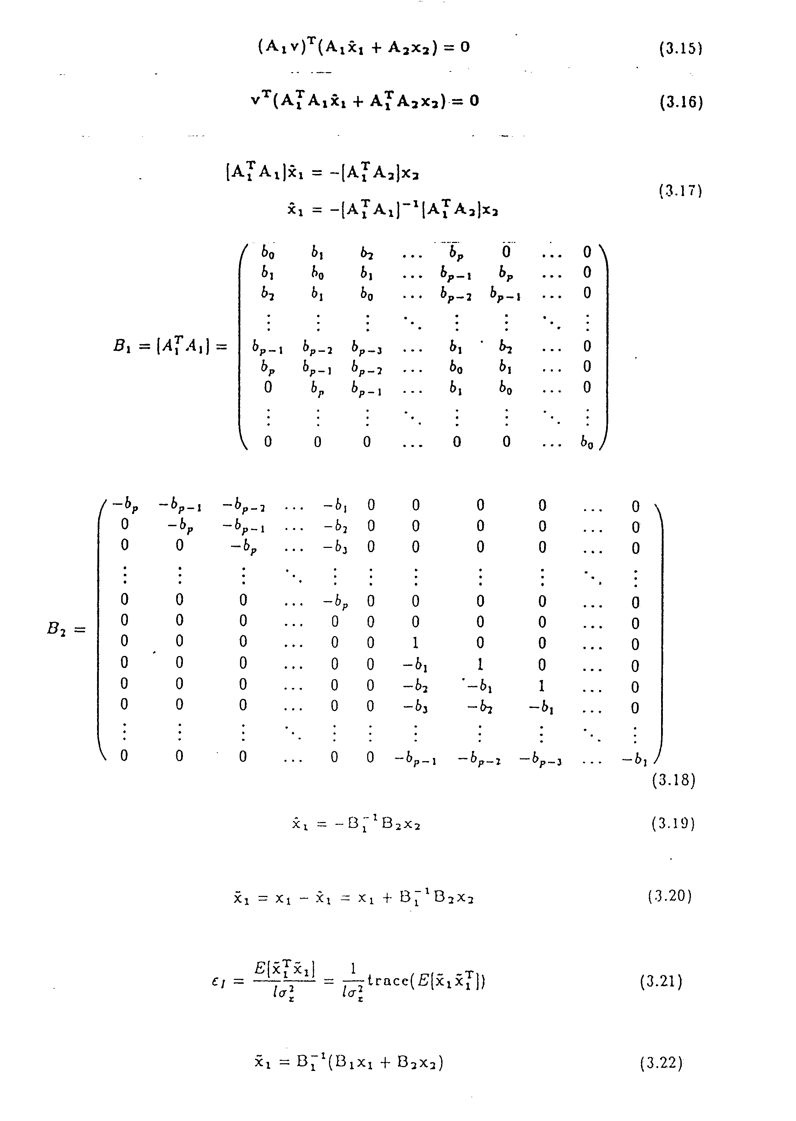

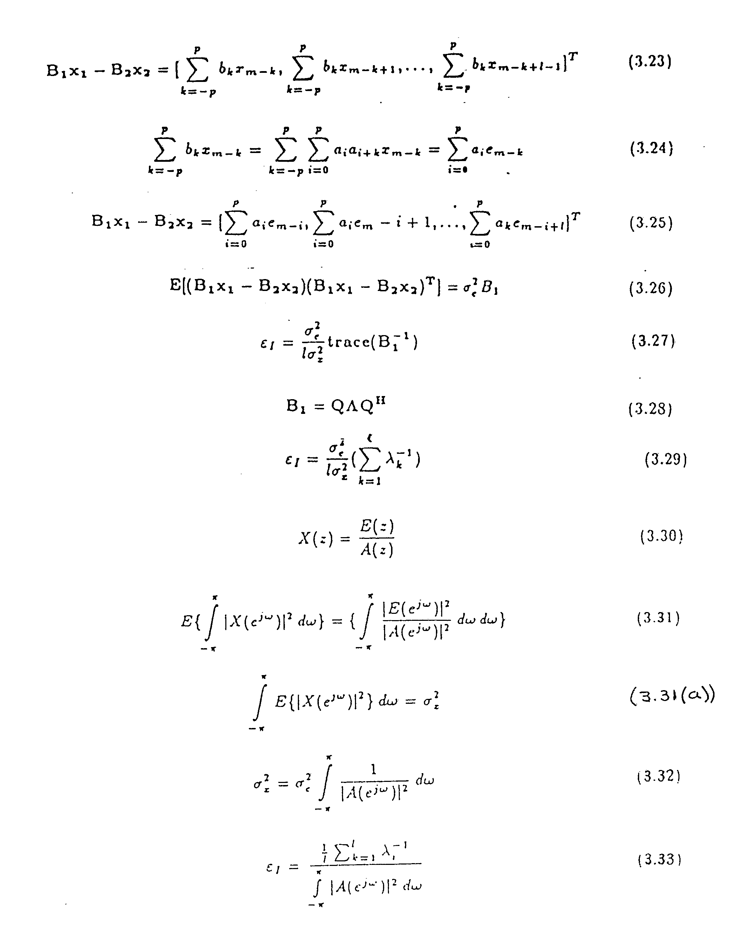

A flow chart exemplifying the system in accordance with the invention is shown in Figure 4.

In Figure 4, a portion of the input signal ($S_i$) has good data missing at G, between good data B in front and good data A following. After generation of the mathematical model, both the data at G and at A are predicted, giving rise to predicted data A′ which is compared with actual data A to enable recalculation of the probable data missing at G, whereby output signal $S_O$ results.

## Claims

1. A signal processing system for handling a signal in which a gap occurs in good data characterised in that, an estimate of the signal values to replace the missing data is obtained by:-

A. generating a mathematical model using good data from both before and after the gap to give a signal model for predicting values of data in the gap,

B. using the mathematical model to predict data values for the gap using good data values preceding the gap,

C. continuing to use the mathematical model to predict values for points following the gap for which actual values exist.

D. comparing the predicted values for points following the gap with the actual values available from the good data following the gap and, without altering the model, recalculating the predicted data values for the points in the gap so as to minimise the total error in the predicted values for the points following the gap for which predicted values and actual values are available, and

E. substituting the recalculated values for the points in the gap.

2. A system according to Claim 1, characterised in that, by use of high speed processing, real time estimation and restoration of gaps in the signal is effected.

3. A system according to Claim 1 or Claim 2, characterised by its application to signals produced by auto-regressive (AR) processes.

4. A system according to any of claims 1 to 3, characterised in that interpolation is effected using polynomial interpolation.

5. A system according to any of claims 1 to 3, characterised in that interpolation is effected using the Lagrange formula.

6. A system according to Claim 3, applied to the restoration of a sequence of unkown samples of an autoregressive (AR) process embedded in a number of known samples, characterised in that an interpolation algorithm is employed wherein the available data samples on both sides of the missing data points are used to produce a sub-optimal estimate of the coefficient vector of the assumed AR model, the parameter estimates are then employed in a least squares optimisation step to estimate the unknown signal samples, and these estimates are used as inputs in further iterations of the algorithm in order to improve the estimation quality.

7. A system according to Claim 6, characterised in that the process involved is assumed to have a Gaussian probability distribution.

8. A system according to Claim 7, wherein the interpolation algorithm iterates between estimating the AR model parameters, giving an estimate to the unknown signal sequence, and improving the signal estimate using the AR parameter estimates.

Fig. 3.1

Fig. 3.1 (a)

Fig. 3.1 (b)

Fig. 3.1[c]

Fig 3.2

Fig 3.3 (a)

Fig. 3.3 (b)

Fig 3.3 [c]

(a)

(b)

Fig 3.4

(a)

(b)

Fig 3.5

[a]

[b]

Fig.3.6

Fig 4

$$x_n = \sum_{k=1}^{p} a_k x_{n-k} + e_n \qquad (3.1)$$

$$S(\omega) = \frac{\sigma_e^2}{\left|\sum_{k=0}^{p} a_k e^{-jk\omega}\right|^2}$$

$$= \frac{\sigma_e^2}{\left|\sum_{k=-p}^{p} b_k e^{-jk\omega}\right|^2} \cdot \qquad (3.2)$$

$$b_k = \sum_{i=0}^{p} a_i a_{i+k} \qquad \sigma_e^2 = E(e_n^2) \qquad (3.3)$$

$$= \text{excitation power signal}$$

$$x_n = \sum_{k=0}^{P-1} a_k x_{n-k} + e_n \qquad 0 < n < N-1 \qquad (3.4)$$

$$\begin{pmatrix} e_p \\ e_{p-1} \\ \vdots \\ e_{m-1} \\ e_m \\ e_{m+1} \\ e_{m+2} \\ \vdots \\ e_{m+l+p-2} \\ e_{m+l+p-1} \\ e_{m+l+p} \\ e_{m+l+p+1} \\ \vdots \\ e_{N-1} \end{pmatrix} = \begin{pmatrix} x_p \\ x_{p-1} \\ \vdots \\ x_{m-1} \\ x_m \\ x_{m+1} \\ x_{m+2} \\ \vdots \\ x_{m+l+p-2} \\ x_{m+l+p-1} \\ x_{m+l+p} \\ x_{m+l+p+1} \\ \vdots \\ x_{N-1} \end{pmatrix} - \begin{pmatrix} x_{p-1} & x_{p-2} & \cdots & x_0 \\ x_{p-2} & x_{p-3} & \cdots & x_1 \\ \vdots & \vdots & \ddots & \vdots \\ x_{m-2} & x_{m-3} & \cdots & x_{m-p-1} \\ x_{m-1} & x_{m-2} & \cdots & x_{m-p} \\ x_m & x_{m-1} & \cdots & x_{m-p+1} \\ x_{m+1} & x_m & \cdots & x_{m-p+2} \\ \vdots & \vdots & \ddots & \vdots \\ x_{m+l+p-3} & x_{m+l+p-4} & \cdots & x_{m+l-2} \\ x_{m+l+p-2} & x_{m+l+p-3} & \cdots & x_{m+l-1} \\ x_{m+l+p-1} & x_{m+l+p-2} & \cdots & x_{m+l} \\ x_{m+l+p} & x_{m+l+p-1} & \cdots & x_{m+l+1} \\ \vdots & \vdots & \ddots & \vdots \\ x_{N-1} & x_{N-2} & \cdots & x_{N-p-1} \end{pmatrix} \begin{pmatrix} a_1 \\ a_2 \\ \vdots \\ a_{p-1} \\ a_p \end{pmatrix}$$

$$(3.5)$$

$$e = x - [X]a \qquad (3.6)$$

$$e^T e(x_1, a) = x^T x + a^T X^T X a - 2a^T X^T x \qquad (3.7)$$

$$\hat{a}(\hat{x}_1) = [X^T X]^{-1} X^T x \qquad (3.8)$$

$$
\begin{pmatrix} e_m \\ e_{m+1} \\ e_{m+2} \\ \vdots \\ e_{m+l+p-2} \\ e_{m+l+p-1} \end{pmatrix} = \begin{pmatrix} x_m \\ x_{m+1} \\ x_{m+2} \\ \vdots \\ x_{m+l+p-2} \\ x_{m+l+p-1} \end{pmatrix} - \begin{pmatrix} x_{m-1} & x_{m-2} & \cdots & x_{m-p} \\ x_m & x_{m-1} & \cdots & x_{m-p+1} \\ x_{m+1} & x_m & \cdots & x_{m-p+2} \\ \vdots & \vdots & \ddots & \vdots \\ x_{m+l+p-3} & x_{m+l+p-4} & \cdots & x_{m+l-2} \\ x_{m+l+p-2} & x_{m+l+p-3} & \cdots & x_{m+l-1} \end{pmatrix} \begin{pmatrix} a_1 \\ a_2 \\ \vdots \\ a_{p-1} \\ a_p \end{pmatrix}
$$

$$(3.9)$$

$$
\begin{pmatrix} e_m \\ e_{m+1} \\ e_{m+2} \\ e_{m+3} \\ e_{m+4} \\ \vdots \\ e_{m+p-1} \\ e_{m+p} \\ e_{m+p+1} \\ \vdots \\ e_{m+l+p-2} \\ e_{m+l+p-1} \end{pmatrix} = \begin{pmatrix} 1 & 0 & 0 & 0 & \cdots & 0 \\ -a_1 & 1 & 0 & 0 & \cdots & 0 \\ -a_2 & -a_1 & 1 & 0 & \cdots & 0 \\ -a_3 & -a_2 & -a_1 & 1 & \cdots & 0 \\ -a_4 & -a_3 & -a_2 & -a_1 & \cdots & 0 \\ \vdots & \vdots & \vdots & \vdots & \ddots & \vdots \\ -a_p & -a_{p-1} & -a_{p-2} & -a_{p-3} & \cdots & 0 \\ 0 & -a_p & -a_{p-1} & -a_{p-2} & \cdots & 0 \\ 0 & 0 & -a_p & -a_{p-1} & \cdots & 0 \\ \vdots & \vdots & \vdots & \vdots & \ddots & \vdots \\ 0 & 0 & 0 & 0 & \cdots & -a_{p-1} \\ 0 & 0 & 0 & 0 & \cdots & -a_p \end{pmatrix} \begin{pmatrix} x_m \\ x_{m+1} \\ x_{m+2} \\ x_{m+3} \\ \vdots \\ x_{m+l-1} \end{pmatrix}
$$

$$
+ \begin{pmatrix} -a_p & -a_{p-1} & -a_{p-2} & \cdots & -a_1 & 0 & 0 & 0 & 0 & \cdots & 0 \\ 0 & -a_p & -a_{p-1} & \cdots & -a_2 & 0 & 0 & 0 & 0 & \cdots & 0 \\ 0 & 0 & -a_p & \cdots & -a_3 & 0 & 0 & 0 & 0 & \cdots & 0 \\ \vdots & \vdots & \vdots & \ddots & \vdots & \vdots & \vdots & \vdots & \vdots & \ddots & \vdots \\ 0 & 0 & 0 & \cdots & -a_p & 0 & 0 & 0 & 0 & \cdots & 0 \\ 0 & 0 & 0 & \cdots & 0 & 0 & 0 & 0 & 0 & \cdots & 0 \\ 0 & 0 & 0 & \cdots & 0 & 0 & 1 & 0 & 0 & \cdots & 0 \\ 0 & 0 & 0 & \cdots & 0 & 0 & -a_1 & 1 & 0 & \cdots & 0 \\ 0 & 0 & 0 & \cdots & 0 & 0 & -a_2 & -a_1 & 1 & \cdots & 0 \\ 0 & 0 & 0 & \cdots & 0 & 0 & -a_3 & -a_2 & -a_1 & \cdots & 0 \\ \vdots & \vdots & \vdots & \ddots & \vdots & \vdots & \vdots & \vdots & \vdots & \ddots & \vdots \\ 0 & 0 & 0 & \cdots & 0 & 0 & -a_{p-1} & -a_{p-2} & -a_{p-3} & \cdots & -a_1 \end{pmatrix} \begin{pmatrix} x_{m-p} \\ x_{m-p+1} \\ x_{m-p+2} \\ x_{m-p+3} \\ \vdots \\ x_{m-1} \\ 0 \\ x_{m+l} \\ x_{m+l+1} \\ x_{m+l+2} \\ \vdots \\ x_{m+l+p+1} \end{pmatrix}
$$

$$(3.10)$$

$$
e = A_1 x_1 + A_2 x_2 \tag{3.11}
$$

$$
\varepsilon = e^T e = (A_1 x_1 + A_2 x_2)^T (A_1 x_1 + A_2 x_2) \tag{3.12}
$$

$$
\hat{x}_1 = x_1 + \mu v \tag{3.13}
$$

$$
\frac{\partial \varepsilon}{\partial \mu} = (A_1 v)^T (A_1 \hat{x}_1 + A_2 x_2) + (A_1 \hat{x}_1 + A_2 x_2)^T (A_1 v) = 0 \tag{3.14}
$$

$$(A_1 v)^T (A_1 \hat{x}_1 + A_2 x_2) = 0 \tag{3.15}$$

$$v^T (A_1^T A_1 \hat{x}_1 + A_1^T A_2 x_2) = 0 \tag{3.16}$$

$$[A_1^T A_1] \hat{x}_1 = -[A_1^T A_2] x_2$$

$$\hat{x}_1 = -[A_1^T A_1]^{-1} [A_1^T A_2] x_2 \tag{3.17}$$

$$B_1 = [A_1^T A_1] = \begin{pmatrix} b_0 & b_1 & b_2 & \ldots & b_p & 0 & \ldots & 0 \\ b_1 & b_0 & b_1 & \ldots & b_{p-1} & b_p & \ldots & 0 \\ b_2 & b_1 & b_0 & \ldots & b_{p-2} & b_{p-1} & \ldots & 0 \\ \vdots & \vdots & \vdots & \ddots & \vdots & \vdots & \ddots & \vdots \\ b_{p-1} & b_{p-2} & b_{p-3} & \ldots & b_1 & b_2 & \ldots & 0 \\ b_p & b_{p-1} & b_{p-2} & \ldots & b_0 & b_1 & \ldots & 0 \\ 0 & b_p & b_{p-1} & \ldots & b_1 & b_0 & \ldots & 0 \\ \vdots & \vdots & \vdots & \ddots & \vdots & \vdots & \ddots & \vdots \\ 0 & 0 & 0 & \ldots & 0 & 0 & \ldots & b_0 \end{pmatrix}$$

$$B_2 = \begin{pmatrix} -b_p & -b_{p-1} & -b_{p-2} & \ldots & -b_1 & 0 & 0 & 0 & 0 & \ldots & 0 \\ 0 & -b_p & -b_{p-1} & \ldots & -b_2 & 0 & 0 & 0 & 0 & \ldots & 0 \\ 0 & 0 & -b_p & \ldots & -b_3 & 0 & 0 & 0 & 0 & \ldots & 0 \\ \vdots & \vdots & \vdots & \ddots & \vdots & \vdots & \vdots & \vdots & \vdots & \ddots & \vdots \\ 0 & 0 & 0 & \ldots & -b_p & 0 & 0 & 0 & 0 & \ldots & 0 \\ 0 & 0 & 0 & \ldots & 0 & 0 & 0 & 0 & 0 & \ldots & 0 \\ 0 & 0 & 0 & \ldots & 0 & 0 & 1 & 0 & 0 & \ldots & 0 \\ 0 & 0 & 0 & \ldots & 0 & 0 & -b_1 & 1 & 0 & \ldots & 0 \\ 0 & 0 & 0 & \ldots & 0 & 0 & -b_2 & -b_1 & 1 & \ldots & 0 \\ 0 & 0 & 0 & \ldots & 0 & 0 & -b_3 & -b_2 & -b_1 & \ldots & 0 \\ \vdots & \vdots & \vdots & \ddots & \vdots & \vdots & \vdots & \vdots & \vdots & \ddots & \vdots \\ 0 & 0 & 0 & \ldots & 0 & 0 & -b_{p-1} & -b_{p-2} & -b_{p-3} & \ldots & -b_1 \end{pmatrix} \tag{3.18}$$

$$\hat{x}_1 = -B_1^{-1} B_2 x_2 \tag{3.19}$$

$$\tilde{x}_1 = x_1 - \hat{x}_1 = x_1 + B_1^{-1} B_2 x_2 \tag{3.20}$$

$$\epsilon_I = \frac{E[\tilde{x}_1^T \tilde{x}_1]}{l \sigma_x^2} = \frac{1}{l \sigma_x^2} \mathrm{trace}(E[\tilde{x}_1 \tilde{x}_1^T]) \tag{3.21}$$

$$\tilde{x}_1 = B_1^{-1} (B_1 x_1 + B_2 x_2) \tag{3.22}$$

$$B_1 x_1 - B_2 x_2 = [\sum_{k=-p}^{p} b_k x_{m-k}, \sum_{k=-p}^{p} b_k x_{m-k+1}, \ldots, \sum_{k=-p}^{p} b_k x_{m-k+l-1}]^T \qquad (3.23)$$

$$\sum_{k=-p}^{p} b_k x_{m-k} = \sum_{k=-p}^{p} \sum_{i=0}^{p} a_i a_{i+k} x_{m-k} = \sum_{i=0}^{p} a_i e_{m-k} \qquad (3.24)$$

$$B_1 x_1 - B_2 x_2 = [\sum_{i=0}^{p} a_i e_{m-i}, \sum_{i=0}^{p} a_i e_m - i + 1, \ldots, \sum_{i=0}^{p} a_k e_{m-i+l}]^T \qquad (3.25)$$

$$E[(B_1 x_1 - B_2 x_2)(B_1 x_1 - B_2 x_2)^T] = \sigma_e^2 B_1 \qquad (3.26)$$

$$\varepsilon_I = \frac{\sigma_e^2}{l \sigma_x^2} \text{trace}(B_1^{-1}) \qquad (3.27)$$

$$B_1 = Q \Lambda Q^H \qquad (3.28)$$

$$\varepsilon_I = \frac{\sigma_e^2}{l \sigma_x^2} (\sum_{k=1}^{l} \lambda_k^{-1}) \qquad (3.29)$$

$$X(z) = \frac{E(z)}{A(z)} \qquad (3.30)$$

$$E\{\int_{-\pi}^{\pi} |X(e^{j\omega})|^2 \, d\omega\} = \{\int_{-\pi}^{\pi} \frac{|E(e^{j\omega})|^2}{|A(e^{j\omega})|^2} \, d\omega \, d\omega\} \qquad (3.31)$$

$$\int_{-\pi}^{\pi} E\{|X(e^{j\omega})|^2\} \, d\omega = \sigma_x^2 \qquad (3.31(a))$$

$$\sigma_x^2 = \sigma_e^2 \int_{-\pi}^{\pi} \frac{1}{|A(e^{j\omega})|^2} \, d\omega \qquad (3.32)$$

$$\varepsilon_I = \frac{\frac{1}{l} \sum_{k=1}^{l} \lambda_i^{-1}}{\int_{-\pi}^{\pi} |A(e^{j\omega})|^2 \, d\omega} \qquad (3.33)$$